Europäisches Patentamt

European Patent Office

Office européen des brevets

(11) Publication number: **0 042 206**
A2

# EUROPEAN PATENT APPLICATION

(21) Application number: 81301702.7

(22) Date of filing: 16.04.81

(51) Int. Cl.³: **B 41 J 5/30,** B 41 J 1/22, G 06 F 3/12, G 06 K 15/02

(30) Priority: 28.04.80 US 144716

(43) Date of publication of application: 23.12.81 Bulletin 81/51

(84) Designated Contracting States: CH DE FR GB IT LI NL SE

(71) Applicant: XEROX CORPORATION, Xerox Square - 020, Rochester New York 14644 (US)

(72) Inventor: Sohl, Gordon, 425 Ridgecrest Drive, Richardson Texas (US)

(74) Representative: Weatherald, Keith Baynes et al, European Patent Attorney c/o Rank Xerox LImited, Patent Dept. Rank Xerox House 338 Euston Road, London NW1 3BH (GB)

(54) Electronic printer and method of reprogramming an electronic printer.

(57) For use in an electronic printer (10) having a serial impact printer (12) and an electronic processor (34), apparatus is provided to reprogram the system each time a supply or accessory item (84) is changed. The apparatus includes an active read-only memory chip (122) mounted on a supply item (84), such as a print wheel (84) provided in an easy load cartridge (86), a ribbon in a cartridge, etc. Apparatus (128) is carried by the printer (12) to connect the read-only memory chip (122) to the processor (34) upon attachment of the supply item (84) to the printer (12).

## ELECTRONIC PRINTER

The present invention relates in general to electronic data printers and/or electronic typing systems and, more particularly, to means for controlling the printing operation in accordance with changes in supply items, such as the type character carrying element, the ribbon or like replaceable components.

Electronically controlled printers and typing systems of a large variety of capabilities and types are presently well known in the electronic graphic arts. In recent years, the automatic printing/typing technology previously developed has been applied to smaller machines as would be encountered in office typing systems and the like. This trend has provided the impetus for more versatile devices capable of producing higher quality printing. In addition to the well-known proportional spacing and automatic line justification features, other items for improving copy quality, such as controlling the print hammer energy for each character and providing for a variety of type fonts, have also been incorporated into more recent machines.

U.S. Patents 4,124,312 and 4,127,335 disclose an impact printer with an easy load print wheel mechanism. This allows the operator to easily and quickly change print wheels so typing can be accomplished with different type fonts.

U.S. Patent 3,858,509 discloses a high-speed printer, which includes a read-only memory wired into the printer, containing identification words related to the sequential character position of a rotary printing wheel. The identification words in read-only memory contain an additional binary bit, which provides information to a hammer logic unit as to whether the specific character is to be hit hard or lightly.

U.S. Patent 4,138,719 discloses an electronic typing system including a central processor and a plurality of peripherals including a keyboard means, printer means, buffer means and means for recording data on record media. The central processor includes a read-only memory wired into the system to provide information regarding such things as character-versus-spoke correspondence information, character width, hammer force, etc.

U.S. Patent 4,130,882 discloses language translating apparatus, which acts under program control to enable an automatic writing system to be adapted to operate with keyboard input peripherals, which are standard outside the United States. When data are entered into the system at the keyboard, the language translator peripheral, which includes a plurality of translator read-only memories wired into the system, is active to translate the resulting input codes into recordable system codes to which the automatic writing system may respond.

U.S. Patent 4,074,798 discloses apparatus for providing variable print hammer energy information and variable character spacing information for the characters of each font used in an electronic typing system having interchangeable print wheels, wherein the individual print wheels carry self-descriptive information in coded form on a passive read-only memory. The data on the print wheel are read by a single-track optical sensing apparatus.

In the prior art apparatus, read-only memories are wired into the system to provide the necessary data, such as character-to-spoke correspondence information, character width, hammer energy, paper-feed line spacings, language translation data, etc., whereby the electronic typing system may perform the desired functions. The above noted data must be determined at the time the read-only memories (ROM) are designed and manufactured for incorporation into the system. This requirement limits the versatility of the system by limiting changes/updates in print wheel layout and design, hammer energy, etc., which may be introduced after the system has been marketed. Even in those instances where some of the data are incorporated in a passive read-only memory located on the print wheel, the capacity of a passive read-only memory is very limited and can only provide a small amount of data. A read-only memory wired into the system is still required. In addition, there is always the question of reliability of the method and apparatus for reading the information from the passive read-only memory on the print wheel into the system.

The invention as claimed is intended to provide a solution for various prior art deficiencies including the problem of how to easily and economically introduce changes to a system presently marketed and being used by the customer; such changes as a new type style, which varies in character location or character widths or impact energy requirements and perhaps a new type of ribbon, which requires a change in the amount of advancement of ribbon for each character printed or a reduction in impact force during printing, etc. It might also be desirable to increase the number of countries and languages the system could handle subsequent to the introduction of the system.

The advantages offered by the invention are mainly that the electronic typing system or data printer would be compatible with future changes so the product family could be upgraded without costly modifications. A new print wheel could be designed, which has different characters and has some of the old characters located on different spokes; the width or overall size of the characters could be changed; the impact energy associated with various characters could be changed; a new language print wheel could be introduced; and a new ribbon could be introduced without having any impact on the system or any need for modifications.

Accordingly the present invention provides an electronic printer which is as claimed in the appended claims:

The invention will now be described by way of example with reference to the accompanying drawings which illustrate only one specific embodiment, in which:

Figure 1 is a simplified perspective view of an automatic typing system of the type with which the present invention may be advantageously utilized;

Figure 2 is a simplified block diagram of the controller for the automatic typing system shown in Figure 1;

Figure 3 is a simplified side view of a print carriage including a print element loading apparatus of the type with which the present invention may be advantageously utilized;

Figure 4 is a front perspective view of a print wheel loading apparatus as well as of a print wheel cartridge of the type with which the present invention may be advantageously utilized;

Figure 5 is a rear view of the print wheel cartridge shown in Figure 4;

Figure 6 is a fragmentary plan view of a ribbon cartridge embodying the present invention; and

Figure 7 is a simplified schematic of one embodiment of the present invention.

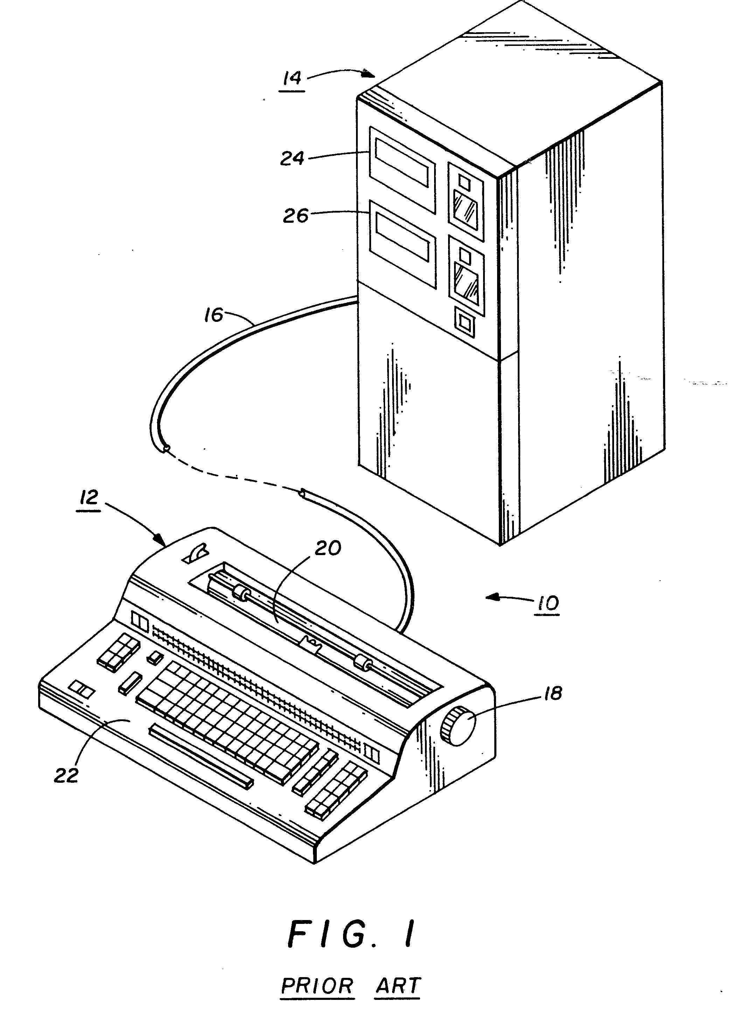

Referring now to Figure 1, an automatic typing system 10 is shown comprising a printer 12 and a control console 14, which are interconnected by a multi-conductor cable 16. As described in substantial detail in commonly assigned US. Patent 4,138,719   the automatic typing system 10 is selectively operable in a record mode and in a playback mode with fixed (i.e., ten or twelve pitch) or proportional character spacing.

Outwardly, the printer 12 has a reasonably standard typewriter-like appearance. There are knobs 18 (only one being shown) coupled to opposite ends of a platen 20 so that an operator may load and manually advance paper or other suitable copy carrier into and through the printer 12. Furthermore, there is a keyboard 22 including a customary complement of alphanumeric keys, together with several special function keys and levers.

Customarily, paper is loaded into the printer 12, and one or more magnetic recording media are loaded into receptacles 24 and 26 on the control console 14 in preparation for operation of the typing system 10 in its record or playback mode. During the record mode, appropriately coded alphanumeric characters and control commands are entered by the operator via the keyboard 22 at the printer 12 and then transferred through the cable 16 to the control console 14. The control console 14 serially responds to those coded data signals under program control to feed coded control signals and timing signals back through the cable 16 to the printer 12 so that a "rough draft" of what the operator is entering is generated in hard copy form. At the same time, the coded alphanumeric characters and control commands are stored within the control console 14 on one of the magnetic recording media. The operator may then make any changes, corrections, etc., in the rough draft. Conversely, in the playback mode, the coded characters and the control commands are read from the recording medium by the control console 14, which, again, supplies coded control signals and timing signals for the printer 12 under program control. Those signals are fed through the cable 16 to the printer 12 thereby causing the printer 12 to produce a "final" edited hard copy.

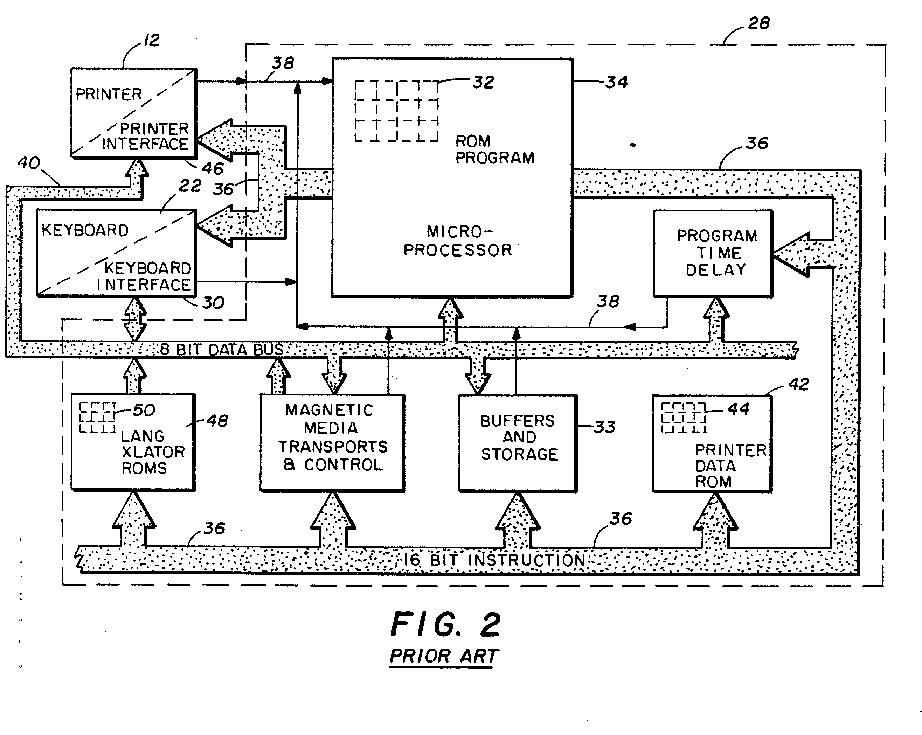

Referring to Figure 2 for a review of a simplified version of the controller 28 (located in the control console 14) for the automatic typing system 10, it will be noted that eight bits of each of the code words provided by the keyboard 22 are fed in parallel to the keyboard interface 30 where the code words come under program control. The program control operation occurs as a result of the incrementing of the read-only memory 32 within the microprocessor 34 and the attendant issuance thereby of 16 bit instructions on the 16-bit instruction word bus 36. The various peripherals are each controlled by instructions issued in this manner on the common instruction word bus 36 while the addressing of the read-only memory 32, which contains a fixed program to control the automatic typing system 10, is controlled in response to conditions placed on the common status bus by the various peripherals and various data gated onto the common data bus 40 and loaded into registers within the microprocessor 34 for subsequent inspection and classification.

Thus, in a typical print operation where data entered at the keyboard 22 are merely printed by the printer 12, the automatic typing system 10, when engaged, would go through an initialization routine where the read-only memory 32 would be sequentially incremented to cause 16-bit instructions to be issued in sequence to power up and initialize the system. Thereafter, the microprocessor 34 would enter a monitoring routine wherein the condition of the various peripherals is monitored on the common status bus 38 on a sequential basis, which is continued until something occurs that causes a branch routine to be initiated relative to the microprocessor 34. In this case, since we are generating input data at the keyboard 22 for subsequent printing, a depression of a key at keyboard 22 would cause a character ready flag to be generated on the common status bus 38. When this flag is sampled by microprocessor 34, a branch routine would be initiated thereby to cause the character ready at the keyboard 22 to be gated onto the common data bus 40 and loaded into the microprocessor 34. This character would be inspected and classified, and if it was a printable character, the character would then be gated onto the common data bus 40 and loaded within the printer data read-only memory (ROM) peripheral 42. Once loaded, it would cause the necessary bits of printer data to be read from the printer data ROM 44 onto the common data bus 40, to the microprocessor 34 and then on to the printer interface 46 via the common data bus 40 and then on to the printer 12.

The data supplied to the printer 12 from the printer data ROM 44, which is wired into the system, include such things as character-to-spoke correspondence information, character width/carriage escapement/ribbon feed, hammer energy, line index information, etc. At the end of a line being printed, index information as read in the form of a constant from the printer data ROM 44, which is generated as a function of the indexing set by the appropriate lever at the keyboard 22, is forwarded to the printer 12 so that appropriate indexing of the paper at the end of the line of printing will occur.

Thus, it will be appreciated that the microprocessor 34 issues instructions from ROM 32 through the common instruction bus 36 to cause an initialization of the automatic typing system 10 and thereafter causes instructions to be issued to cause the appropriate processing of information entered into the automatic typing system 10 as a function of the nature of the information as entered on the common data bus 40 and the pertinent status of individual conditions within the peripherals as sensed on the common status bus 38. As mentioned previously, the operation of the system is described in great detail in commonly assigned U.S. Patent 4,138,719.

In order for the automatic typing system 10 to accommodate international versions wherein new key caps and print elements would need only be supplied to define market country versions of the same basic machine, a language translator peripheral 48, including language translator ROM's 50 wired into the system, is included in the automatic typing system 10. The presence of the language translator peripheral is indicated to the controller 28, and a small portion of the memory of the language translator peripheral 48 is devoted to the native language corresponding to the market version of the automatic typing system 10 to which the key caps and print font would correspond. After the correct code signal for the language desired has been entered from the keyboard 22, then when data are entered into the automatic typing system 10 from the keyboard 22, the language translator peripheral 48 is active to translate the resulting input codes into recordable system codes to which the automatic typing system 10 as a whole may respond, and which represent the alphanumeric information entered at the keyboard 22 even though the resulting codes may not correspond to those generated at the keyboard 22. This is done, in effect, through the functions of the language translator peripheral 48, which treats input codes from the keyboard 22 as key position codes and translates the key position codes into character codes corresponding to the characters that reside at those key positions for the native country assigned or another elected country as defined by the appropriate coded signal entered by the operator. Once such input codes are translated into system compatible media codes, the same may be processed through the controller 28 in the normal manner. When printing is to occur, the system compatible media codes, which resulted from the initial actions of the language translator peripheral 48, must again be translated so that appropriate information may be accessed for spoke selection, hammer energy, escapement, etc., from the printer data ROM 44; or where such information does not reside in the printer data ROM 44 due to the nature of the character defined in a particular language, the language translator ROM's 50 must further be accessed to provide appropriate print information to the printer 12 to cause the character to be printed.

As will be appreciated, the foregoing description of the language translation concept is highly simplified, and if the reader is interested in further details, reference may be had to U.S. Patent 4,130,882.

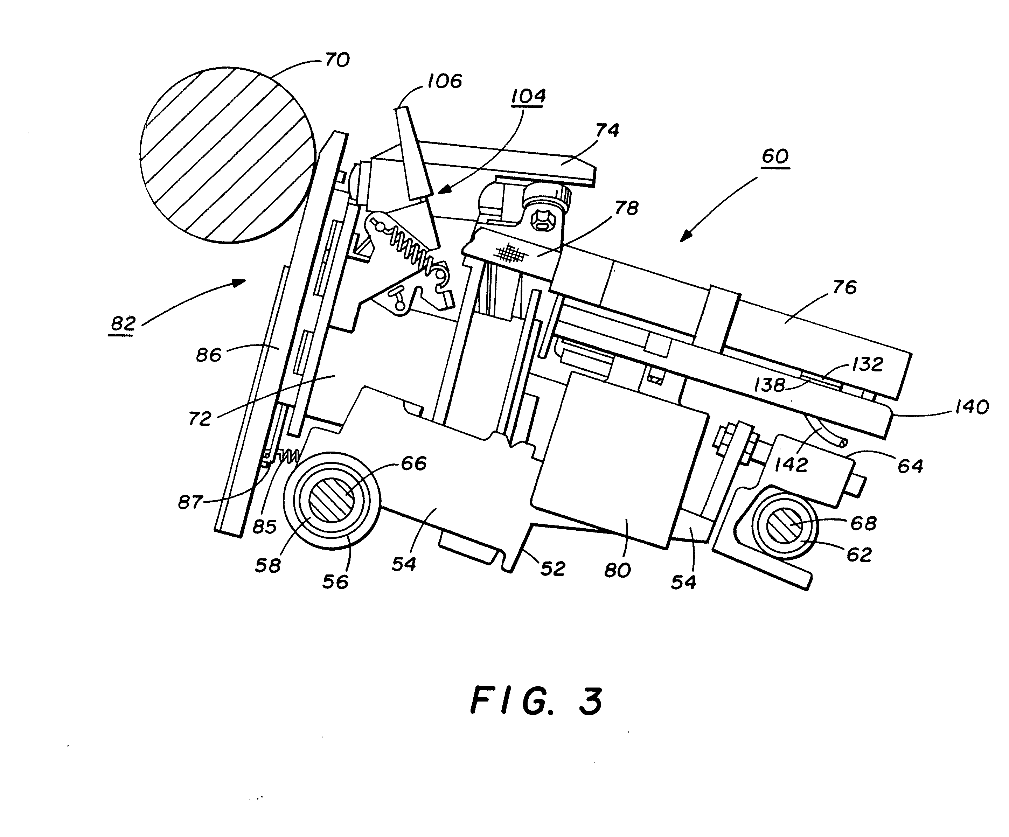

Referring to Figure 3, a carriage assembly 60 is shown for use in a serial printer, such as printer 12 (see Figure 1), and includes a main frame 52 having opposing sidewalls 54 (only one visible). The main frame 52 has a pair of aligned openings 56 formed in the respective sidewalls 54 adjacent the front end of carriage assembly 60. The openings 56 are adapted to receive in locked relation a bearing assembly 58. A similar bearing assembly 62 is attached by a bracket assembly 64 to the sidewalls 54 thereby enabling the carriage assembly 60 to be transported along a pair of parallel rails 66 and 68, engaged through the pair of linear bearing assemblies 58 and 62 and thus move past a platen 70 included in printer 12.

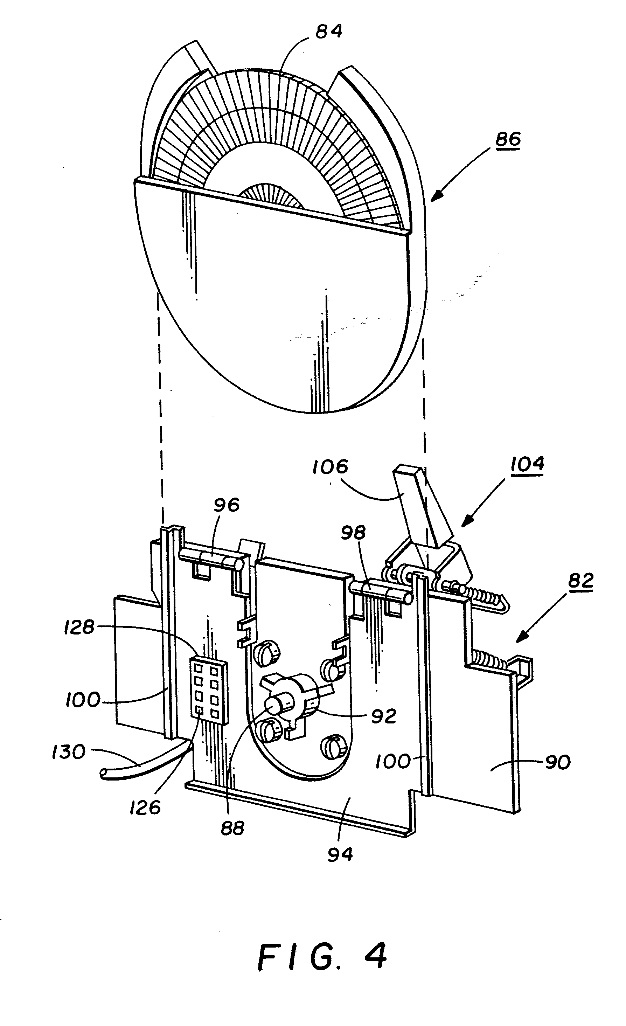

The carriage assembly 60 is adapted to transport and includes a print wheel element drive motor 72 for controlling the direction and speed of rotation of a print wheel 84 (see Figure 4) engaged with the motor drive shaft 88 (see Figure 4). Attached to the rear of drive motor 72 is a conventional inductive transducer assembly 73 to generate a position signal that can be sensed to keep track of the rotational position of the motor drive shaft 88 and thus that of the print wheel 84. Also supported by the carriage assembly 60 are a hammer assembly 74 for impacting an aligned character element on the print wheel 84 (see Figure 4) against the adjacent platen 70, a ribbon cartridge 76 for supplying inked ribbon 78 between the hammer assembly 74 and the platen 70 (this portion of the ribbon 78 has been omitted for clarity of other items), and a ribbon drive motor 80 for advancing the ribbon 78 during operation of the printer 12.

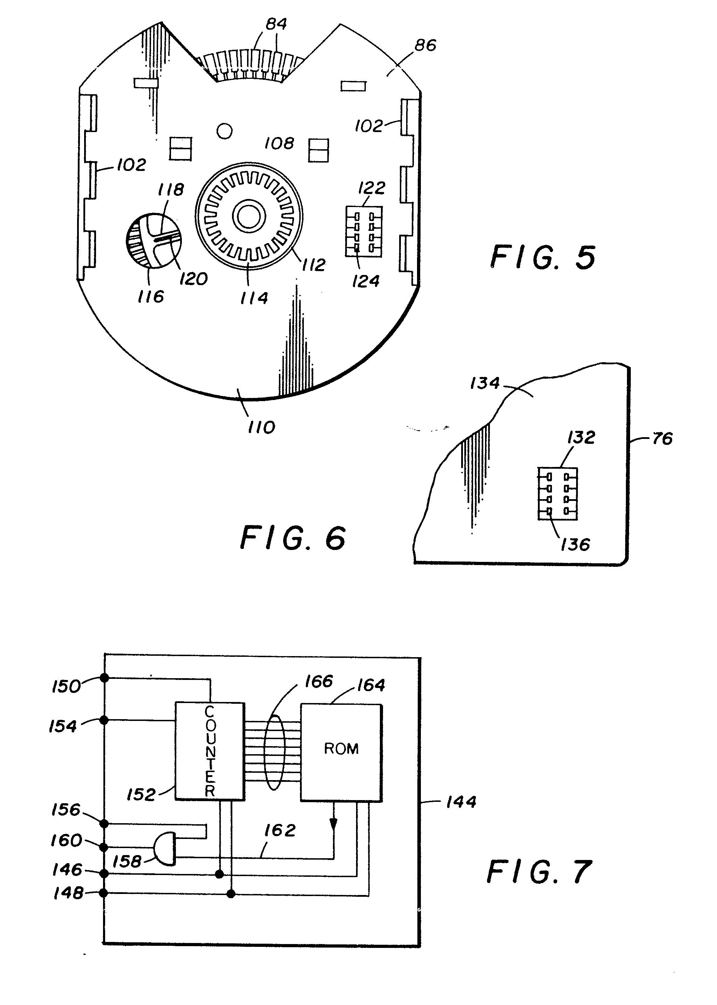

Referring now to Figures 3-5, the carriage assembly 60 includes a print wheel cartridge loading apparatus 82 for loading a print wheel 84 contained in a print wheel cartridge 86 onto the drive shaft 88 of the print wheel drive motor 72. The loading apparatus 82 includes a support member in the form of a plate 90, which is attached by suitable means (not shown) to the main frame 52 of the carriage assembly 60. As best shown in Figure 4, the plate 90 has an opening 92 therein through which the drive shaft 88 of the drive motor 72 is adapted to be disposed. Hinged to the front of the support plate 90 is a guide member 94, which is pivotable relative to the support plate 90 by hinges 96 and 98. The guide member 94 has a pair of edge sleeves 100 for accommodating complementary edge guide members 102 on the rear side of the print wheel cartridge 86 (see Figure 5).

A pivot control assembly 104 normally maintains the guide member 94 in a first or unloaded position (pivoted away from the support plate 90) until a print wheel cartridge 86 is received by the guide member 94 and guided in a downward direction due to the cooperation of the edge sleeves 100 on the guide member 94 and the edge guide members 102 on the cartridge 86. When the print wheel cartridge 86 reaches a predetermined position during the downward movement along the guide member 94, the operator will actuate the pivot control assembly 104 by pivoting lever 106 back away from support plate 90, and the guide member 94 will be released from its first or unloaded position and will be allowed to move or pivot toward the support plate 90 under the biasing action of spring 85 (see Figure 3). The guide member 94 will then come to rest at its second or loaded position against projection 87 (see Figure 3) with opening 108 of print wheel 84 positioned over shaft 88 of the print wheel drive motor 72.

Referring to Figure 5, it will be noted that the rear cover 110 of the print wheel cartridge 86 includes a circular opening 112 for accommodating hub portion 114 of the print wheel 84 in a manner enabling the free rotation of the print wheel 84 within the print wheel cartridge 86. Opening 92 within hub portion 114 accommodates shaft 88 of the print wheel drive motor 72. A further opening 116 is provided to expose radial stiffening ribs 118 formed on the rear side of the print wheel 84 as the print wheel 84 is rotated. One of the ribs 118 preferably contains magnetically or optically sensorable indicia 120. A suitable magnetic or optical sensor (not shown) mounted on carriage assembly 60 in alignment with the opening 116 may be employed to detect the passage of the indicia 120. Such detection may be used to sense the "home" position of the print wheel 84, i.e., the print wheel 84 is brought to rest a predetermined number of character spaces following detection of the home indicia 120. It is thus apparent that the print wheel 84 may be in any rotational position within the print wheel cartridge 86 when the print wheel cartridge 86 is loaded into the print wheel cartridge loading apparatus 82 as the print wheel 84 can be rotated one revolution to align the print wheel 84 to the home position.

In accordance with the present invention and with reference to Figures 4 and 5, an active read-only memory (ROM) chip 122 is secured to the rear cover 110 of the print wheel cartridge 86 at a predetermined location. ROM 122 is secured by well-known means, such as adhesives, etc., with the input/output contacts 124 (flat pad type contacts) facing outwardly from the rear cover 110. Upon insertion of the print wheel cartridge 86 into the print wheel loading apparatus 82, the input/output contacts 124 align with and make contact with spring-type contacts 126 of socket 128 installed in a predetermined location in guide member 94. Spring-type contacts 126 are connected via cable 130 to controller 28. ROM 122 contains such information as character-to-spoke correspondence information, character width/carriage escapement/ribbon feed, hammer energy, language translation information, etc., which is relative to the particular print wheel 84 contained in the print wheel cartridge 86. With each print wheel 84 and print wheel cartridge 86 having its own ROM 122, print wheels developed in the future, which vary from the present print wheels, can be compatible with the typing system since each print wheel will carry information unique to that particular print wheel.

With reference to Figures 3 and 6, an active ROM chip 132 is secured in a predetermined location to the bottom cover portion 134 of ribbon cartridge 76 with the input/output contacts 136 facing outwardly from said bottom cover portion 134. When ribbon cartridge 76 is installed on carriage assembly 60, input/output contacts 136 align with and make contact with spring-type contacts (not shown) of socket 138 installed in a predetermined location in the ribbon cartridge mounting plate 140. The spring-type contacts (not shown) of socket 138 are connected via cable 142 to controller 28. The spring contacts of socket 138 are the same as or similar to those of socket 128. ROM 132 contains such information as ribbon feed, hammer energy, etc., which is relative to the particular ribbon 78 contained in the ribbon cartridge 76. With each ribbon cartridge having its own ROM 132, ribbons developed in the future, which vary from the present ribbons, can be compatible with the typing system since each ribbon cartridge will carry information unique to the characteristics of that particular ribbon.

In a typing system 10, which incorporates the present invention, the read-only memory 32 would be programmed to interrogate ROM 122 and ROM 132 (if included in the system) during the initialization routine and transfer all the data from ROM's 122 and 132 to memory locations (not shown) in microprocessor 34 and/or memory in buffers and storage 33 where it would then be readily available when needed during the operation of the system. The present invention takes some of the program storage away from the typing system 10 and/or the printer 12 and provides that storage with the supply items, i.e., the print wheel, ribbon, etc. In this manner, allowance for unique characteristics of each supply item could be optimized.

The input/output contacts 124 and 136 could comprise a total of 16 to 18 pins if off-the-shelf ROM's were used for ROM's 122 and 132 or could vary in number if the ROM chip was a custom designed ROM chip.

Figure 7 discloses a ROM chip designed to reduce the number of external connections to be made to the chip. As disclosed, the number of external connections to ROM chip 144 has been reduced to six. Power and ground are brought into the ROM chip 144 on lines or connections 146 and 148, respectively. The reset or clear function is brought in on line or connection 150 and is connected to counter 152. The count signal is brought in on line or connection 154 and is also connected to counter 152. The read signal is brought in on line or connection 156 and is connected to one input of AND gate 158. The data line is connected to line or connection 160 and to the output of AND gate 158. The other input 162 to AND gate 158 is connected to ROM 164. Appropriate address lines 166 are connected between counter 152 and ROM 164. All these external connections are contiguous with microprocessor 34 through appropriate cabling, such as cable 130 or cable 142. After the supply item with ROM chip 144 attached has been installed in the printer 12, and power has been applied, a reset pulse will be applied to line 150. Thereafter count pulses will be applied to line 154, and the resulting output from counter 152 over lines 166 will address ROM 164, and the resulting data from ROM 164 will be read out on line 162 to AND gate 158. As AND gate is enabled _via_ line 156, the resulting data from ROM 164 will be entered in microprocessor 34; and the microprocessor 34 would pulse the counter, read the data, pulse the counter, read the data, etc., until all the information contained in ROM 164 was transferred to memory in microprocessor 34 where the data could then be readily accessible when required.

As alternatives, AND gate 158 could be moved into microprocessor 34 and then there would only be five lines or connections to ROM chip 144. Another embodiment includes having the counter 152 free running, and have the reset pulse on line 150 release counter 152, and then the counter would automatically address ROM 164, and all the data would be read out automatically to microprocessor 34.

ROM 164 is a 2048 x 1 bit memory, which has sufficient capacity for most uses. Today, of course, a 4096 x 8 bit chip is available if such capacity was required. The use of such a chip would increase the size of the internal counter 152 and require a ROM output bit select circuit to be added to the chip 144 but would not necessarily increase the number of external connections to the ROM chip.

It will be appreciated that there has been shown an illustrative arrangement for use in an electronic data printer and/or an electronic typing system whereby a portion of the intelligence used to control the system has been placed on various supply items and contain the information relative to the particular supply item. This arrangement allows a system to be built, which allows for future expansion. It allows a system to be produced today, which can be upgraded in the future without costly and difficult retrofits. The present invention could be employed with other types of print wheel cartridge loading devices, such as disclosed in U.S. Patents 4,124,312 and 4,127,335.

CLAIMS:

1.    An electronic printer (10) having a printing mechanism (12) a processor (34), means (22) for inputting data to be printed, at least one replaceable component (86), and

means (82) on said printing mechanism for receiving the component (86) characterised by:

an active read-only memory (122) mounted on the component and containing data specific thereto, and

means (128) carried by said electronic printer for operatively connecting said read-only memory (122) with said processor (34).

2.    Apparatus as claimed in claim 1, characterised in that the read-only memory (122) contains data bits which are transmittable to said processor (34) for changing the function of at least one operating component of said printer in accordance with the characteristics of the component as given by the stored data.

3.    Apparatus as claimed in claim 1 or 2 characterised in that the component includes a supply member (84) in a stationary cartridge (86), and in that said read-only memory (122) is mounted on said cartridge (86).

4.    Apparatus as claimed in claim 3, characterised in that the supply member is a print wheel (84).

5.    Apparatus as claimed in claim 4, characterised in that said characteristics include at least character-to-spoke correspondence information, character width information and hammer energy information for each character to be printed.

6.    Apparatus as claimed in claim 4 or 5, characterised in that said characteristics include language translation information.

7.    A method for reprogramming an electronic printer (10) having a printing mechanism (12), means (82) for receiving a replaceable component (84), a processor (34) and means (22) for inputting data to be printed, in accordance with data descriptive of said component characterised by the steps of:

0042206

- 2 -

providing the component with an active read-only memory (ROM) (122) which contains data for changing the function of at least one operating component of said printer (10) in conformity with the characteristics of said component,

placing said component (84) on said printer (10) and thereby connecting said ROM (122) to said processor (34),

ading the contents of the ROM into said processor (34) upon demand, and

subsequently utilizing selected portions of said stored data to control the operation of said printer during a printing operation.

8. A method as claimed in claim 7, characterised in that the component is a print element (84).

9. A method as claimed in claim 8, characterised in that said characteristics include at least character-to-spoke correspondence information, character width information and hammer energy information for each character to be printed.

10. A method as claimed in claim 8 or 9, characterised in that said characteristics inlcude language translation information.

11. A method as claimed in any one of claims 7 to 10, characterised in that the component, or another component, (84) is a ribbon.

FIG. 1

PRIOR ART

FIG. 2

PRIOR ART

FIG. 3

FIG. 4

FIG. 5

FIG. 6

FIG. 7